(19) Europäisches Patentamt
European Patent Office
Office européen des brevets

(11) **EP 3 665 051 B1**

(12) # EUROPÄISCHE PATENTSCHRIFT

(45) Veröffentlichungstag und Bekanntmachung des Hinweises auf die Patenterteilung:
**16.06.2021   Patentblatt 2021/24**

(51) Int Cl.:
***B60T 13/68*** *(2006.01)*      ***B60T 13/66*** *(2006.01)*

(21) Anmeldenummer: **18778801.3**

(22) Anmeldetag: **07.08.2018**

(86) Internationale Anmeldenummer:
**PCT/EP2018/071432**

(87) Internationale Veröffentlichungsnummer:
**WO 2019/030242 (14.02.2019 Gazette 2019/07)**

(54) **ELEKTRISCHE PARKBREMSE**

ELECTRIC PARKING BRAKE

FREIN DE STATIONNEMENT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2017   DE 102017118263**

(43) Veröffentlichungstag der Anmeldung:
**17.06.2020   Patentblatt 2020/25**

(73) Patentinhaber: **KNORR-BREMSE Systeme für Nutzfahrzeuge GmbH**
**80809 München (DE)**

(72) Erfinder:
• **WIEDER, Gerhard**
  **74354 Besigheim (DE)**
• **RÖTHER, Friedbert**
  **74389 Cleebronn (DE)**
• **SCHWAB, Frank**
  **75249 Kieselbronn (DE)**
• **HECKER, Falk**
  **71706 Markgröningen (DE)**
• **HERGES, Michael**
  **80935 München (DE)**

(56) Entgegenhaltungen:
**EP-A1- 2 821 303      DE-A1-102005 058 799**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine elektrische Parkbremse für ein Nutzfahrzeug und ein Verfahren zum Betätigen einer elektrischen Parkbremse, die insbesondere für ein Zugfahrzeug mit einem optionalen Trailer (Anhänger) vorgesehen ist.

Parkbremssysteme müssen verschiedenen Sicherheitsanforderungen genügen. So ist es erforderlich, dass sie in zumindest zwei Zuständen stabil betreibbar sind. In einem ersten Zustand soll ein Bewegen des Fahrzeuges möglich sein, ohne dass ein spontanes Aktivieren der Parkbremse ausgelöst wird - zumindest solange nicht, wie ein ausreichender pneumatischer Druck anliegt. In dem zweiten Zustand soll eine stabile Parkposition eingehalten werden, und zwar auch dann, wenn das Fahrzeug nicht in Betrieb ist. EP 2 821 303 A1 offenbart eine konventionelle elektropneumatische Feststellbremse.

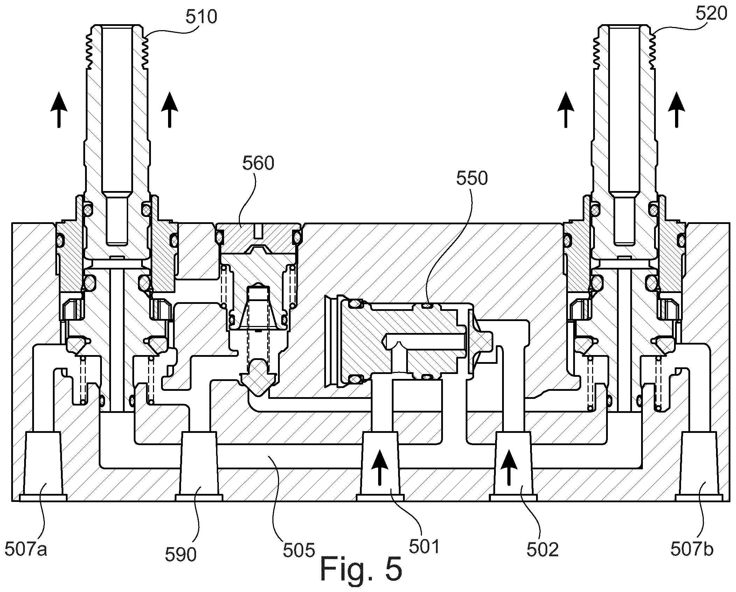

Konventionelle Parkbremssteuerungen für Zugfahrzeuge und Anhänger basieren häufig auf einer aufwendigen pneumatischen Verrohrung in der Kabine des Nutzfahrzeuges. Ein solches konventionelle System ist beispielsweise in der **Fig. 5** gezeigt und umfasst ein erstes Ventil 510, ein zweites Ventil 520, ein Wechselventil 550 und ein Überbrückungsventil 560, die über einen ersten Vorratsdruckanschluss 501 und einen zweiten Vorratsdruckanschluss 502 mit Druckluft versorgt werden. Die beiden pneumatischen Ventile 510, 520 sind z.B. im Armaturenbrett des Zugfahrzeuges angeordnet. Die Bremsdruckluft wird bei Aktivierung an eine Parkbremseinrichtung (z.B. ein Federspeicher im Zugfahrzeug und/oder im Trailer) geleitet, und zwar über einen Fahrzeugparkbremsanschluss 507b (für das Zugfahrzeug) und/oder einem Anhängerparkbremsanschluss 507a (für den Trailer). Der erste Vorratsdruckanschluss 501 und der zweiten Vorratsdruckanschluss 502 sind mit einem Wechselventil 550 (ein sogenanntes Double-Check-Valve oder Select-High-Valve) verbunden, das einen jeweils größeren Druck aus den beiden Vorratsdruckanschlüssen 501, 502 einer Zuleitung 505 zu dem ersten und dem zweiten Ventil 510, 520 zur Verfügung stellt. Das erste Ventil 510 und das zweite Ventil 520 sind jeweils unabhängig voneinander manuell durch einen Fahrer bedienbar. Das erste Ventil 510 trennt in dem gezeigten herausgezogenen Zustand die fluide Verbindung zwischen der Zuleitung 505 und dem Anhängerparkbremsanschluss 507a. In gleicher Weise trennt das zweite Ventil 520 in dem gezeigten Zustand die pneumatische Verbindung zwischen der Zuleitung 505 und dem Fahrzeugparkbremsanschluss 507b. Die gezeigte Stellung des ersten Ventils 510 und des zweiten Ventils 520 stellt somit die stabile Parkposition dar. In diesem Fall sind die Federspeicher der pneumatischen Bremsen mittels einer vorhandenen pneumatischen Verbindung zu einem Entlüftungsanschluss 590 entlüftet und die Bremswirkung wird von Federn in den Federspeichern bewirkt. Bei zu niedrigem Vorratsdruck springen die beiden Ventile 510, 520 von selbst heraus und entlüften die Federspeicher, sodass die stabile Parkposition eingenommen wird.

Falls das Zugfahrzeug zusammen mit dem Trailer bewegt werden sollen, werden das erste Ventil 510 und das zweite Ventil 520 durch den Fahrer manuell hineingedrückt. Dementsprechend öffnet das erste Ventil 510 die pneumatische Verbindung zwischen dem Anhängerparkbremsanschluss 507a und der Zuleitung 505 und das zweite Ventil 520 die pneumatische Verbindung zwischen der Zuleitung 505 und dem Fahrzeugparkbremsanschluss 507b.

Das Überbrückungsventil 560 hat die folgende Funktion. Falls der Fahrer aus der stabilen Fahrposition, wenn beide Ventile 510, 520 in dem hineingedrückten Zustand sich befinden, wieder die Parkposition einnehmen möchte und nur das zweite Ventil 520 aus der Fahrposition herauszieht und das erste Ventil 510 manuell in der unteren Position hält, bildet das Überbrückungsventil 560 eine pneumatische Überbrückung zum Entlüftungsanschluss 590, um den Druckabbau im System trotzdem zu erreichen. Als Folge kommt es in jedem Fall zu einer Entlüftung des Anhängerparkbremsanschlusses 507a, so dass auch der Trailer den stabilen Parkzustand einnimmt.

Das gezeigte Parkbremssystem erfordert jedoch ein pneumatische Verrohrungen in der Kabine des Fahrzeuges, die aufwendig ist. Daher besteht ein Bedarf, diese konventionelle Parkbremssteuerung durch kostengünstigere und sichere elektronische Lösungen zu ersetzen, die weniger Platz im Armaturenbrett des Zugfahrzeuges benötigen und trotzdem eine automatische Parkbremsfunktion ermöglichen.

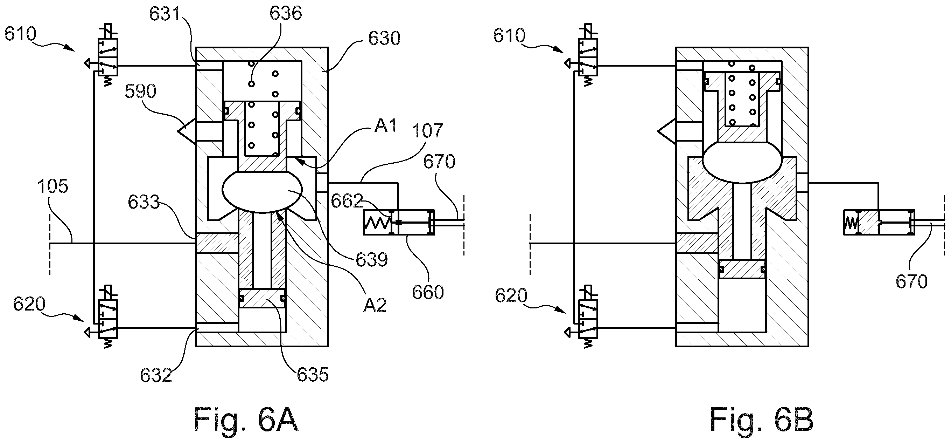

Ein Beispiel für ein konventionelles elektronisches Parkbremssystem ist in den **Fig. 6A, 6B** gezeigt, wobei die Fig. 6A die stabile Parkposition und die Fig. 6B die stabile Fahrposition darstellt.

Die elektrische Parkbremse umfasst wieder ein erstes Ventil 610, ein zweites Ventil 620 und eine Ventileinrichtung 630, die zwischen einer Zuleitung 105 und einer Ableitung 107 ausgebildet sind. Die Zuleitung 105 stellt wiederum den Bremsdruckluft bereit und die Ableitung 107 (Auslass) koppelt an den Federspeicher 660. In der stabilen Parkposition (siehe Fig. 6A) bewirkt der Federspeicher 660 durch die Feder eine Bremskraft, die über das Koppelelement 670 ausgeübt wird. In der Fahrposition (siehe Fig. 6B) wird die Parkbremse durch die Bremsdruckluft, die einen Kolben 662 entgegen der Federkraft bewegt, gelöst.

Das erste Ventil 610 und das zweite Ventil 620 sind in diesem Beispiel elektrisch steuerbare Solenoid-Ventile, die zwischen zwei Positionen magnetisch steuerbar sind. Die Ventileinrichtung 630 umfasst einen ersten Einlass 631, einen zweiten Einlass 632, einen dritten Einlass 633, einen Auslass 107 und eine Entlüftung 590. Zwischen dem ersten Einlass 631 und der Zuleitung 105 ist das erste Ventil 610 geschaltet, das den ersten Einlass 631 entweder mit Druckluft aus der Zuleitung 105 versorgt oder entlüftet. Zwischen dem zweiten Einlass 632 und der Zuleitung 105 ist das zweite Ventil 620 geschaltet, das den zweiten Einlass 632 entweder mit Druckluft aus der Zuleitung 105 versorgt oder entlüftet. Im stromlosen Zustand sind beide Ventile 610, 620 in der entlüfteten Stellung. Der dritte Einlass 633 ist direkt mit der Zuleitung 105 verbunden.

Die Ventileinrichtung 630 umfasst eine Feder 636, die einen Kolben 635 in der Ventileinrichtung 630 vorspannt, sodass der Kolben 635 über ein Schließelement 639 den dritten Einlass 633 pneumatisch verschließt. Dies ist die stabile Parkposition, bei der außerdem das erste und zweite Ventil 610, 620 den ersten und zweiten Einlass 631, 632 entlüften.

Die Ventileinrichtung 630 kann über den zweiten Einlass 632 in die stabile Fahrposition gebracht werden, indem das zweite Ventil 620 über die Zuleitung 105 Druckluft in eine Kammer unterhalb des Kolbens 635 einlässt. Als Folge wird auf den Kolben 635 an einer Unterseite ein zusätzlicher pneumatischer Druck ausgeübt, der ausreicht, um den Kolben 635 entgegen der Federkraft der Feder 636 nach oben zu bewegen. Der Kolben 635 kann sich so weit nach oben bewegen, bis das Schließelement 639 eine obere Öffnung mit einer Querschnittsfläche A1 verschließt. Dieser Zustand ist in der Fig. 6B gezeigt. Dieser Zustand ist ebenso stabil, da die Kraft, mit der der Kolben 635 nach oben gedrückt wird, gleich dem Produkt aus der Fläche A1 und dem bereitgestellten Druck P der Druckluft ist und die Fläche A1 größer gewählt ist als die Fläche A2, die die Querschnittsfläche an dem unteren Kolbenanschlag 635 darstellt. Daher wird der Kolben 635 mit einer größeren Kraft in der oberen Position gehalten. Damit diese Position auch dann noch stabil ist, wenn das zweite Ventil 620 entlüftet wird, ist die Federkraft F der Feder 636 so gewählt, dass:

$$F < (A1 - A2) * P \, ,$$

wobei $(A1 - A2)*P$ die Kraft ist, mit der Kolben 635 gegen die Feder 636 drückt. Daher kann die Federspannung der Feder 636 das Schließelement 639 nicht entgegen der Druckkraft nach unten drücken.

Wenn der Kolben 635 sich in der oberen Position befindet, wie es in der Fig. 6B gezeigt ist, wird gleichzeitig der Auslass 107 mit dem dritten Einlass 633 verbunden, was dazu führt, dass die pneumatische Druckluft auch an dem Federspeicherzylinder 660 anliegt und dort den Kolben 662 entgegen der Federspannung des Federspeichers 660 bewegt. Damit wird die Bremse gelöst und das Fahrzeug kann bewegt werden. Da der Kolben 635 stabil in der oberen Position verbleibt, kann das Fahrzeug selbst dann bewegt werden, wenn das erste und zweite Ventil 610, 620 entlüftet werden (z.B. stromlos geschaltet werden).

Nachteile der gezeigten elektronischen Variante der Parkbremse sind ihre Komplexität (die Ventileinrichtung 630 braucht insgesamt fünf Anschlüsse) und die Tatsache, dass die stabile Position von der Federkraft abhängt. Wenn die Federkraft über Alterungsprozesse sich ändert, kann dies dazu führen, dass die Ventileinrichtung 630 nicht mehr stabil in den einzelnen Positionen gehalten werden kann.

Daher besteht ein Bedarf nach alternativen Lösungen, die einerseits keine pneumatische Verrohrung in den Kabinen des Zugfahrzeuges brauchen und andererseits mit einfachen pneumatischen Bauelementen umsetzbar sind.

Zumindest ein Teil der obengenannten Probleme wird durch eine elektrische Parkbremse nach Anspruch 1, ein Nutzfahrzeug nach Anspruch 9 und ein Verfahren zum Betreiben einer elektrischen Parkbremse nach Anspruch 11 gelöst. Die abhängigen Ansprüche definieren weitere vorteilhafte Ausführungsformen.

Die vorliegende Erfindung bezieht sich auf eine elektrische Parkbremse für ein Nutzfahrzeug, die Folgendes umfasst: eine Zuleitung für Bremsdruckluft, eine Ableitung von Bremsdruckluft für eine pneumatische Bremseinrichtung, ein erstes Ventil und ein zweites Ventil, die jeweils ansprechend auf elektrische Steuersignale zwischen einem stabilen Zustand und einem aktivierten Zustand schaltbar sind. Außerdem umfasst die elektrische Parkbremse eine Ventileinrichtung, die zwischen der Zuleitung und der Ableitung geschaltet ist und einen Steuereingang aufweist. Die Ventileinrichtung ist ausgebildet, um in Antwort auf Steuersignale an dem Steuereingang zwischen einem stabilen Zustand und einem aktivierten Zustand zu schalten, wobei in dem aktivierten Zustand die Zuleitung mit der Ableitung verbunden ist. Das erste Ventil verbindet in dem stabilen Zustand den Steuereingang der Ventileinrichtung mit der Ableitung, um einen gegenwärtigen Zustand der Ventileinrichtung aufrechtzuerhalten, wenn die Bremsdruckluft an der Ableitung anliegt. In dem aktivierten Zustand verbindet das erste Ventil den Steuereingang der Ventileinrichtung mit dem zweiten Ventil. Das erste Ventil stellt somit eine Rückkopplung her, die solange einen stabilen Zustand bildet, wie ausreichend Druck vorhanden ist (um die Ventileinrichtung in dem aktivierten Zustand zu halten).

Im Rahmen der vorliegenden Erfindung können Signale sowohl elektrische Signale als pneumatische Signale sein. Außerdem sollen Verbindungen im Allgemeinen pneumatische Verbindungen darstellen, sodass eine Komponente, die zwischen zwei anderen Komponenten geschaltet oder mit diesen verbunden ist, so zu verstehen ist, dass sich die Schaltung/Verbindung insbesondere auf einen pneumatischen Fluss bezieht.

Optional verbindet das zweite Ventil in dem stabilen Zustand die Zuleitung mit dem ersten Ventil, um die Ventileinrichtung (über das erste Ventil) zu aktivieren, und entlüftet in dem aktivierten Zustand die Verbindung zum ersten Ventil und zum Steueranschluss der Ventileinrichtung, wenn das erste Ventil im aktivierten Zustand ist. Das zweite Ventil kann aber auch in dem aktivierten Zustand die Zuleitung mit dem ersten Ventil verbinden, um die Ventileinrichtung zu aktivieren, und in dem stabilen Zustand die Verbindung zum ersten Ventil und zum Steueranschluss der Ventileinrichtung entlüften, wenn das erste Ventil im aktivierten Zustand ist. In beiden Fällen handelt es sich um eine "Umsteuerung", bei der Zustand der Ventileinrichtung geändert werden kann.

Optional sind das erste Ventil und/oder das zweite Ventil 3/2-Magnetventile, die in einem stromlosen Zustand den stabilen Zustand automatisch annehmen.

Die Ventileinrichtung kann ein Booster-Ventil mit zumindest einem federvorgespannten Kolben und einer Entlüftungsöffnung sein. Optional ist die Ventileinrichtung ausgebildet, um im stabilen Zustand die Ableitung zu entlüften, wobei die Entlüftungsöffnung in eine Bewegungsrichtung des Kolbens zeigt oder seitlich davon angeordnet sein kann. Beispielsweise kann die Ventileinrichtung Folgendes umfassen: ein Gehäuse mit zumindest zwei Kammern, eine erste Öffnung, eine zweite Öffnung und eine dritte Öffnung. Die Ventileinrichtung kann außerdem Folgendes umfassen: einen ersten Kolben in der ersten Kammer, der durch ein erstes Federelement entgegen einem Druck an der zweiten Öffnung vorgespannt ist, und einen zweiten Kolben in der zweiten Kammer, der durch ein zweites Federelement vorgespannt ist, um eine Verbindung zwischen der ersten Öffnung und der dritten Öffnung in einem drucklosen Zustand zu unterbrechen. Der erste Kolben kontaktiert bei einer Druckluftzufuhr über die zweite Öffnung den zweiten Kolben, sodass beide Kolben sich entgegen der Federspannung der ersten Feder und der Federspannung der zweiten Feder zusammen verschieben und die Verbindung zwischen der ersten Öffnung und der dritten Öffnung hergestellt wird. Im drucklosen Zustand entfernt sich der erste Kolben von dem zweiten Kolben, wodurch der dritte Einlass mit der Entlüftungsöffnung verbunden wird.

Optional umfasst die Parkbremse ein Wechselventil mit einem ersten Anschluss für eine erste Druckluftzufuhr und einem zweiten Anschluss für eine zweite Druckluftzufuhr. Das Wechselventil ist ausgebildet, um in Abhängigkeit davon, wo ein höherer Bremsdruck anliegt, die erste Druckluftzufuhr oder die zweite Druckluftzufuhr mit der Zuleitung zu verbinden.

Die vorliegende Erfindung bezieht sich auch auf ein elektrisches Parkbremssystem für eine Zugmaschine (Nutzfahrzeug) mit einer Parkbremseinrichtung, insbesondere einem Federspeicher, und einem Anhängerparkbremsanschluss. Das Parkbremssystem umfasst eine erste und eine zweite elektrische Parkbremse, wie sie zuvor beschrieben wurden. Die erste elektrische Parkbremse ist zwischen der Druckluftzufuhr und einer ersten Ableitung, die an die Bremseinrichtung der Zugmaschine koppelt, ausgebildet. Die zweite elektrische Parkbremse ist zwischen der Druckluftzufuhr und einer zweiten Ableitung, die an dem Anhängerparkbremsanschluss koppelt, ausgebildet.

Die vorliegende Erfindung bezieht sich auch auf ein Nutzfahrzeug mit dem Parkbremssystem und einer Bremseinrichtung, die zumindest einen Federspeicherzylinder aufweist, der im drucklosen Zustand eine Parkbremse über eine Federvorspannkraft aktiviert und durch die Bremsdruckluft an der Ableitung die Parkbremse löst.

Optional kann das Nutzfahrzeug eine Steuereinrichtung aufweisen, die elektrisch das erste Ventil und/oder das zweite Ventil steuert, um:

- auf ein Feststellen eines Losfahrwunsches, die Ventileinrichtung durch ein Aktivieren zumindest des ersten Ventils zu aktivieren und sicherzustellen, dass das zweite Ventil Druckluft von der Zuleitung durchleitet;
- auf ein Feststellen eines Parkwunsches, die Ventileinrichtung in den stabilen Zustand durch ein Aktivieren zumindest des ersten Ventils in den stabilen Zustand zu bringen und sicherzustellen, dass das zweite Ventil die Verbindung zum ersten Ventil entlüftet.

Die vorliegende Erfindung bezieht sich auch auf ein Verfahren zum Betätigen der elektrischen Parkbremse. Das Verfahren umfasst

- auf ein Feststellen eines Losfahrwunsches, Aktivieren der Ventileinrichtung durch ein Aktivieren zumindest des ersten Ventils;
- auf ein Feststellen eines Parkwunsches, Schalten der Ventileinrichtung in den stabilen Zustand durch ein Entlüften des Steuereingangs durch ein Aktivieren zumindest des ersten Ventils.

Optional wird der Parkwunsch durch zumindest eine der folgenden Bedingungen ausgelöst:

- eine Eingabe des Fahrers,
- Empfang eines entsprechenden Signals einer Steuereinheit bei autonomem Fahrbetrieb,
- Feststellen eines Stillstandes des Fahrzeuges bei Vorliegen von zumindest einer Zusatzbedingung, die insbesondere ein Ausschalten der Zündung oder eine fortlaufende Betätigung der Betriebsbremse oder eine andere Bedingung umfasst.

Optional wird der Losfahrwunsch durch zumindest eine der folgenden Bedingungen ausgelöst:

- Eingabe des Fahrers,

- Betätigen eines Beschleunigungspedals bei laufendem Motor,
- Empfang eines entsprechenden Signals einer Steuereinheit bei autonomem Fahrbetrieb,
- Betätigen der Betriebsbremse.

Optional ist die elektrische Parkbremse Teil des Parkbremssystems und das Betätigen der ersten elektrischen Parkbremse und/oder der zweiten elektrischen Parkbremse kann einzeln oder gemeinsam oder nacheinander erfolgen.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor (z.B. in einer Steuereinheit des Fahrzeuges) läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.

Fig. 1        zeigt eine elektrische Parkbremse gemäß einem Ausführungsbeispiel der vorliegenden Erfindung.

Fig. 2        zeigt ein elektrisches Parkbremssystem gemäß weiterer Ausführungsbeispiele.

Fig. 3A,B    veranschaulichen weitere Detail des elektrischen Parkbremssystems gemäß weiterer Ausführungsbeispiele.

Fig. 4        zeigt ein Flussdiagram für ein Verfahren zum Steuern einer elektrischen Parkbremse gemäß einem Ausführungsbeispiel.

Fig. 5        zeigt eine konventionelle Parkbremssteuerung über pneumatische Ventile.

Fig. 6A,B    zeigt eine konventionelle elektrische Parkbremse.

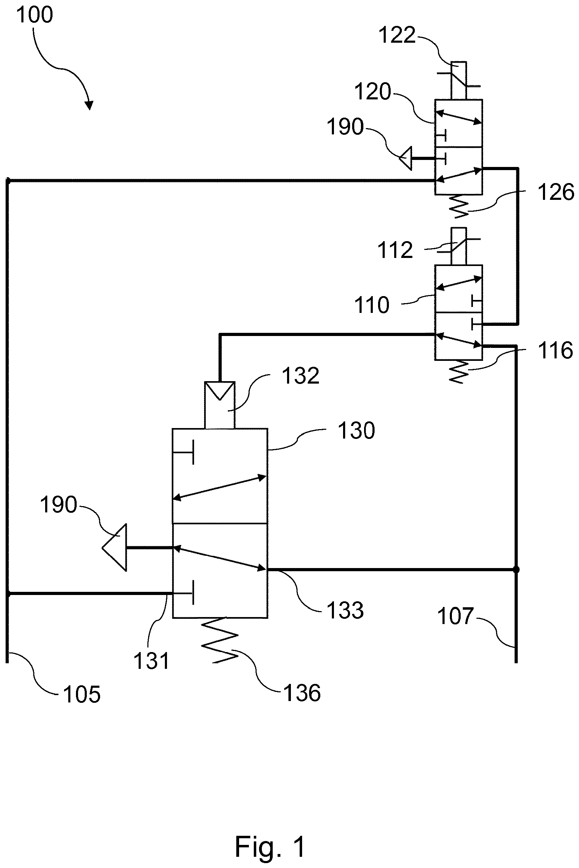

**Fig. 1** zeigt ein Ausführungsbeispiel für eine elektrische Parkbremse für ein Nutzfahrzeug. Die elektrische Parkbremse 100 umfasst ein erstes Ventil 110, ein zweites Ventil 120 und eine Ventileinrichtung 130 (z.B. ein Booster-Ventil), die zwischen einer Zuleitung 105 für Bremsdruckluft und einer Ableitung 107 für die Bremsdruckluft zu einer pneumatische Bremseinrichtung pneumatisch geschaltet sind. Das erste Ventil 110 und das zweite Ventil 120 sind in diesem Ausführungsbeispiel 3/2-Ventile, die ansprechend auf elektrische Steuersignale zwischen einem stabilen Zustand und einem aktivierten Zustand schaltbar sind.

Die Ventileinrichtung 130 umfasst einen ersten Einlass 131, der mit der Zuleitung 105 verbunden ist, einen zweiten Einlass 132 und einen dritten Einlass 133, der mit der Ableitung 107 verbunden ist. Es versteht sich, dass in Abhängigkeit der pneumatischen Strömungsrichtungen die Einlässe auch Auslässe sein können. Der zweite Einlass 132 ist ein Steuereingang, um in Antwort auf (pneumatische) Steuersignale zwischen einem stabilen Zustand und einem aktivierten Zustand zu schalten. Der Steuereingang 132 kann ebenfalls einen Einlass für eine pneumatische Leitung darstellen, um über Druckluft einen oder mehrere Kolben zwischen zwei Stellungen oder Zuständen zu bewegen.

Außerdem umfasst die gezeigte Ventileinrichtung 130 einen Entlüftungsanschluss 190 und eine Vorspanneinrichtung 136, die z.B. eine Feder umfassen kann. In dem stabilen Zustand ist der dritte Einlass 133 mit dem Entlüftungsanschluss 190 verbunden, so dass die Ableitung 107 automatisch entlüftet wird (z.B. bei Druckabfall) und solange entlüftet bleibt, wie kein pneumatisches Steuersignal am Steuereingang 132 anliegt. In der aktivierten Stellung ist der erste Einlass 131 mit dem dritten Einlass 133 und somit die Zuleitung 105 mit der Ableitung 107 verbunden.

Die 3/2-Ventile 110, 120 umfassen ebenfalls drei pneumatische Anschlüsse und zusätzlich jeweils einen elektrischen Steueranschluss 112, 122. Die Steueranschlüsse sind ausgebildet, um auf (elektrische) Steuersignale das erste 3/2-Ventil 110 und/oder das zweite 3/2-Ventil 120 zwischen dem stabilen und dem aktivierten Zustand zu schalten. Beispielsweise können die zwei 3/2-Ventile 110, 120 Magnetventile (Solenoid-Ventile) sein, wobei ein Elektromagnet die Schaltoperationen bewirkt.

Das erste 3/2-Ventil 110 verbindet in dem stabilen Zustand beispielsweise die Ableitung 107 mit dem Steuereingang 132 der Ventileinrichtung 130, um bei ausreichender Bremsdruckluft einen gegenwärtigen Zustand der Ventileinrichtung 130 aufrechtzuerhalten. Das erste 3/2-Ventil 110 verbindet in dem aktivierten Zustand den Steuereingang 132 mit dem zweiten 3/2-Ventil 120.

Das zweite 3/2-Ventil 120 verbindet in dem stabilen Zustand beispielsweise die Zuleitung 105 mit dem ersten 3/2-Ventil 110, um bei einem aktivierten ersten 3/2-Ventil 110 die Ventileinrichtung 130 zu aktivieren. Das zweite 3/2-Ventil 120 unterbricht im aktivierten Zustand eine Druckluftzufuhr zum ersten Ventil 110 und entlüftet die Verbindung zum ersten Ventil 110. Wenn das erste Ventil 110 ebenfalls aktiviert ist, wird damit die Ventileinrichtung 130 in den stabilen Zustand gebracht und die Ableitung 107 entlüftet.

Bei weiteren Ausführungsbeispielen (nicht gezeigt) können die Zustände des zweiten Ventils 120 (und in ähnlicher Weise auch des ersten Ventils 110) genau umgekehrt gewählt werden. Daher kann das zweite Ventil 120 in dem stabilen Zustand ebenfalls die Verbindung zu den ersten Ventil 110 entlüften und in dem aktivierten Zustand die Zuleitung 105 mit dem ersten Ventil 110 verbinden.

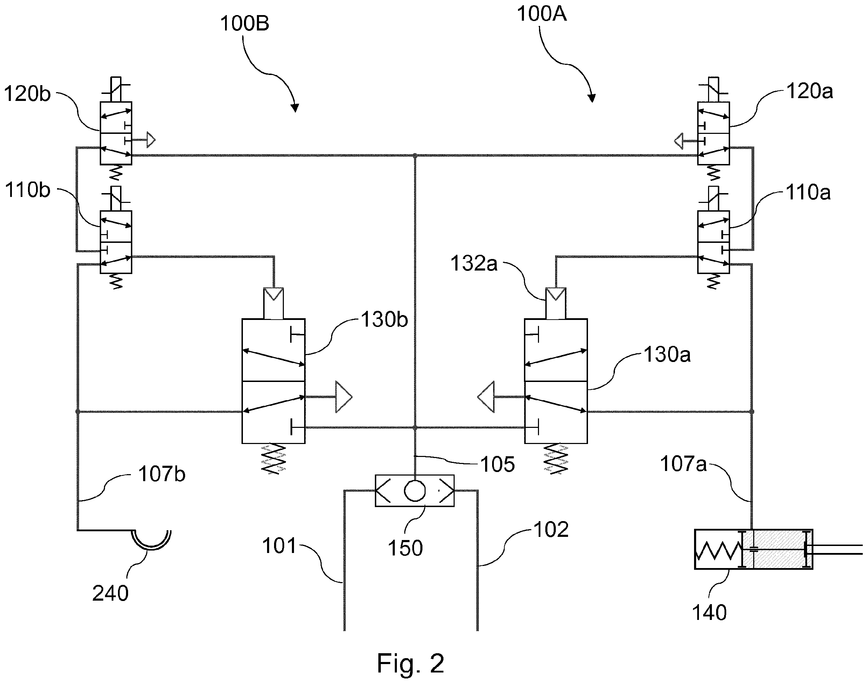

**Fig. 2** zeigt ein elektrisches Parkbremssystem für ein Nutzfahrzeug (z.B. ein Zugfahrzeug) mit einem Trailerparkbremsanschluss 240, einem Federspeicher 140 und einem Wechselventil 150, welches mit einem ersten Druckanschluss 101 und einem zweiten Druckanschluss 102 verbunden ist. Das Wechselventil 150 ist ausgebildet, um den jeweils höheren Druck von dem ersten Druckanschluss 101 und dem zweiten Druckanschluss 102 an eine Zuleitung 105 weiterzuleiten. Trailerparkbremsanschluss 240 und der Federspeicher 140 sind mit jeweils einer Ableitung 107a, 107b verbunden, um mit Druckluft versorgt zu werden (im Fahrzustand) oder entlüftet zu werden (im Parkzustand).

Zwischen der Zuleitung 105 und den Ableitungen 107a, 107b sind entsprechend zwei elektrische Parkbremsen 100A, 100B ausgebildet. Eine erste elektrische Parkbremse 100A betätigt den Federspeicher 140 der Zugmaschine und umfasst eine erste Ventileinrichtung 130a, die mittels zwei 3/2-Ventile 110a, 120a gesteuert wird, um den Federspeicher 140 mit Druckluft zu versorgen oder zu entlüften. Eine zweite elektrische Parkbremse 100B betätigt über den Trailerparkbremsanschluss 240 eine Trailer-Parkbremse und umfasst eine zweite Ventileinrichtung 130b, die ebenfalls mittels zwei 3/2-Ventile 110b, 120b gesteuert wird, um den Trailerparkbremsanschluss 240 mit Druckluft zu versorgen oder zu entlüften.

Beide elektrischen Parkbremsen 100A, 100B können in der gleichen Weise aufgebaut sein und in der gleichen Weise funktionieren wie die elektrische Parkbremse aus der Fig. 1. Eine erneute Beschreibung ist daher nicht erforderlich.

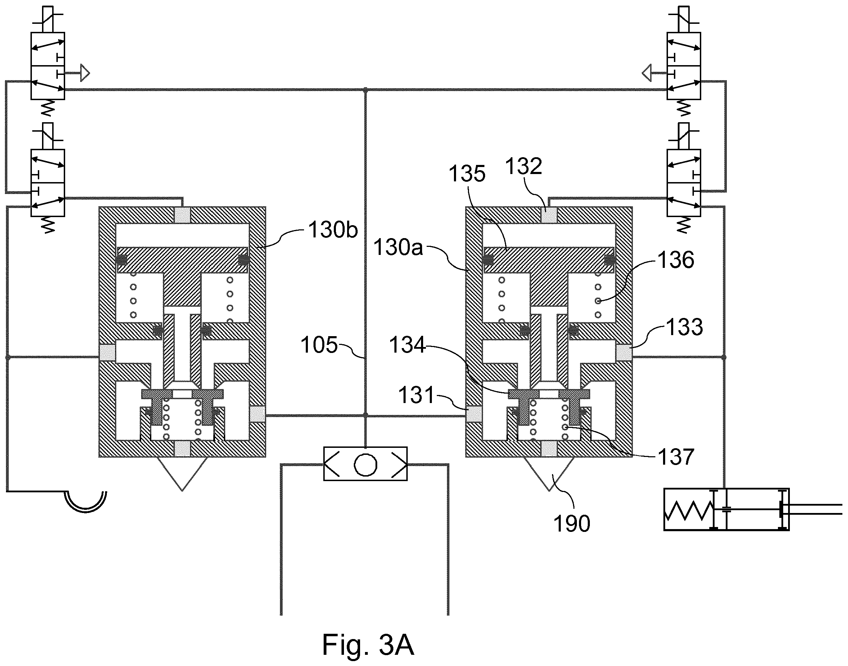

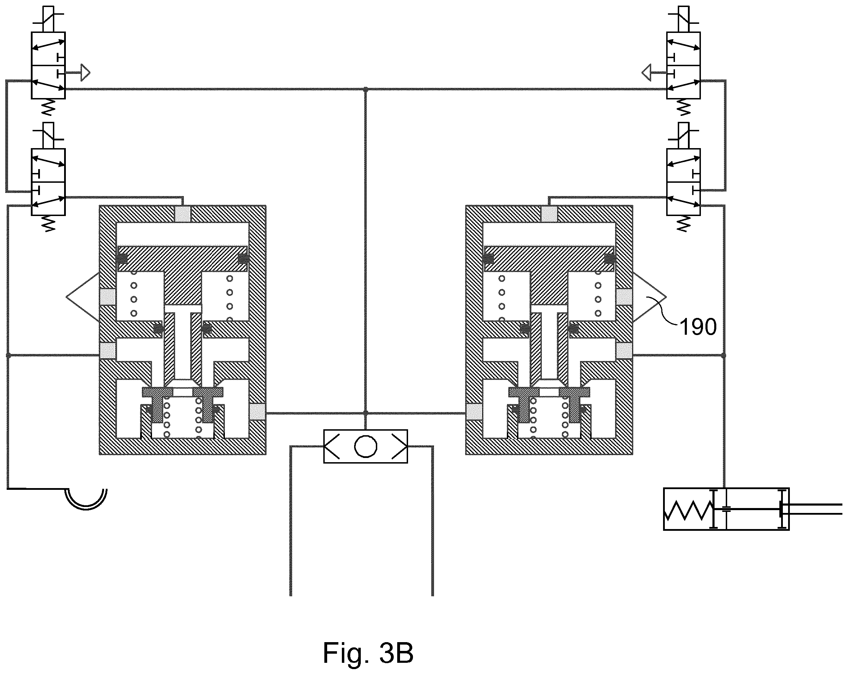

**Fig. 3A,B** zeigen weitere Ausführungsbeispiele für das elektrische Parkbremssystem 100 aus der Fig. 2, wobei weitere Details der ersten und zweiten Ventileinrichtungen 130a, 130b dargestellt sind. Die erste und zweite Ventileinrichtungen 130a, 130b können gleich aufgebaut sein und umfassen jeweils einen ersten Einlass 131, einen zweiten Einlass 132, einen dritten Einlass 133 und einen Entlüftungsauslass 190. Die Ventileinrichtungen 130a, 130b umfassen außerdem jeweils einen ersten Kolben 135 und einen zweiten Kolben 134, die entsprechend durch eine erste Feder 136 und eine zweite Feder 137 vorgespannt sind. Die gezeigten Ventileinrichtungen 130a, 130b sind in einer Schnittdarstellung dargestellt, wobei die gezeigten Elemente beispielsweise rotationssymmetrisch ausgebildet sein können.

Gemäß einer Ausführungsform (siehe Fig. 3A) ist der Entlüftungsauslass 190 unterhalb des zweiten Kolbens 134 ausgebildet und stellt daher eine Öffnung in eine der Bewegungsrichtungen der Kolben dar. Bei einer weiteren Ausführungsform (siehe Fig. 3B) ist der Entlüftungsauslass 190 an einer Seitenwand (seitlich neben den Kolben 134, 135) ausgebildet, um eine Kammer unterhalb des ersten Kolbens 135 nach außen zu öffnen.

Wenn der zweite Einlass 132 entlüftet ist, entfernt sich der erste Kolben 135 von dem zweiten Kolben 134 und die Entlüftungsöffnung 190 wird mit dem dritten Einlass 133 verbunden. Dazu sind in den Kolben 134, 135 Kanäle ausgebildet, so dass die Druckluft von dem dritten Einlass 133 entweder zur Entlüftungsöffnung 190 an der Unterseite (siehe Fig. 3A) oder zu der Entlüftungsöffnung 190 an der Seitenwand (siehe Figur 3B) abgeleitet wird.

Wenn an dem zweiten Einlass 132 Druckluft anliegt, wird der erste Kolben 135 gegen die Federspannung heruntergedrückt bis der erste Kolben 135 in Kontakt mit dem zweiten Kolben 134 kommt und dann diesen entgegen der Federspannung der zweiten Feder 137 nach unten drückt. Da in diesem Zustand der erste Kolben 135 und der zweite Kolben 134 miteinander verbunden sind, ist die Entlüftungsöffnung 190 geschlossen und nicht mehr in Kontakt zu dem dritten Einlass 133. Stattdessen ist der erste Einlass 131 mit dem dritten Einlass 133 verbunden, da der zweite Kolben 134 beim Herunterdrücken den ersten Einlass 131 öffnet.

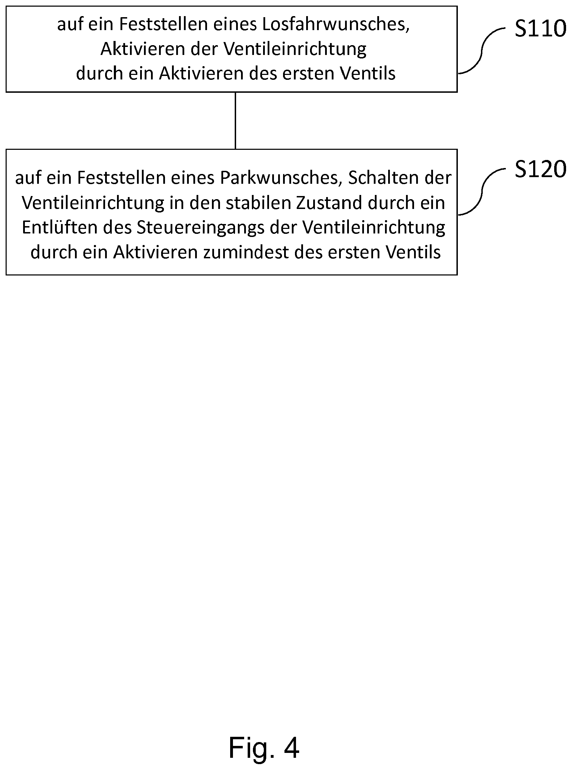

**Fig. 4** zeigt ein Flussdiagramm für ein Verfahren zum Betätigen der beschriebenen elektrischen Parkbremse. Das Verfahren umfasst:

- auf ein Feststellen eines Losfahrwunsches, Aktivieren S110 der Ventileinrichtung 130 durch ein Aktivieren zumindest des ersten Ventils 110;
- auf ein Feststellen eines Parkwunsches, Schalten S120 der Ventileinrichtung 130 in den stabilen Zustand durch ein Entlüften des Steuereingangs 132 der Ventileinrichtung 130 durch ein Aktivieren zumindest des ersten Ventils.

Es versteht sich, dass alle beschriebenen Funktionen der elektrischen Parkbremse 100 oder des Parkbremssystems als weitere optionale Schritte ausgeführt werden können.

Dieses Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

Die Software kann beispielsweise ausgebildet sein, um die Parkbremse von dem Zugfahrzeug und dem Anhänger einzeln oder gemeinsam einzuschalten, und öffnet sie nach Fahrerwunsch. Außerdem kann die Software beim Stillstand unter bestimmten Zusatzbedingungen automatisch die Parkbremse vom Zugfahrzeug und/oder Anhänger einlegen. Ebenso kann die Software unter bestimmten Bedingungen automatisch die Parkbremse vom Zugfahrzeug und/oder Anhänger öffnen, wenn beispielsweise ein Losfahrwunsch vom Fahrer detektiert wurde.

Vorteilhafte Aspekte des elektrischen Parkbremssystems können auch wie folgt zusammengefasst werden: Die erste und zweite Ventileinrichtung 130a, 130b sind beispielsweise je ein Doppelsitz-Boosterventil für die Zugfahrzeugparkbremse bzw. für die Anhängerparkbremse, wobei jedes Boosterventil 130a, 130b mit einem ersten 3/2-Magnetventil 110a, 110b gesteuert werden kann. Dieses erste 3/2 Ventil 110a, 110b ist zwischen zwei Schalterstellungen schaltbar: einer "Rückkopplung" (in dem stabilen Zustand) und einer "Umsteuerung" (in dem aktivierten Zustand). Bei der "Rückkopplung" wird der Ausgang 133 des Boosterventils 130a, 130b mit dessen Steuereingang 132a, 132b verbunden, um dessen Schaltzustand stabil beizubehalten. Bei der Schaltstellung "Umsteuerung" wird der Steuereingang 132a, 132b des Boosterventils 130a, 130b mit einem zweiten 3/2-Magnetventil 120a, 120b verbunden.

Das zweite 3/2-Magnetventil 120a, 120b kann nun den Steuereingang 132a, 132b des jeweiligen Boosterventils 130a, 130b in einer ersten Schaltstellung mit Atmosphäre verbinden (Entlüften), um das Boosterventil 130a, 130b in Entlüftungsstellung zu schalten, oder in einer zweiten Schaltstellung mit einem Vorratsdruck (aus der Zuleitung 105) verbinden, um den Booster 130a, 130b in Belüftungsstellung zu schalten.

Das erste 3/2-Magnetventil 110a, 110b befindet sich im stromlosen Zustand (stabilen Zustand) in der Schaltstellung "Rückkopplung". Nach der Umsteuerung des Boosterventils 130a, 130b wird zunächst das erste 3/2-Magnetventil 110a, 110b wieder stromlos geschaltet, sodass es daher automatisch in die Schaltstellung "Rückkopplung" geht. Danach hat die Schalterstellung des zweiten 3/2-Magnetventils 120a, 120b keinen Einfluss mehr.

Beide Boosterventile 130a, 130b und deren 3/2-Magnetventile 110a, 110b können beispielsweise wie bei konventionellen Parkbremssystemen pneumatisch von einem Wechselventil 150 aus den beiden Vorratskreisen 101, 102 versorgt werden.

Der jeweilige Boosterkolben 135a, 135b wird mit einer Feder 136a, 136b in Richtung "Entlüften" gedrängt. Dadurch kann das Boosterventil 130a, 130b nur in Belüftungsstellung sein, wenn:

Vorratsdruck x Kolbenfläche des Boosterkolbens > Federkraft

gilt. Wenn der Vorratsdruck beider Bremskreise 101, 102 unter diesen Druck sinkt, wird nach Überwindung der Reibung (an dem Kolben 135) der entsprechende Booster 130a, 130b automatisch in die Entlüftungsstellung gehen. Damit wird sichergestellt, dass ein Fahrzeug, das nicht mehr genügend Bremsdruck für die Betriebsbremse hat, automatisch mit der Parkbremse zum Halten kommt.

Das Boosterventil 130a, 130b kann außerdem in zwei Varianten vorhanden sein: mit einer Zentralentlüftung (siehe Fig. 3A) oder einer Seitenentlüftung (siehe Fig. 3B). Das zweite 3/2-Magnetventil 120 kann stromlos auf Belüften geschaltet werden. Alternativ ist es ebenfalls möglich, dass das zweite 3/2-Magnetventil 120 stromlos auf Entlüften geschaltet wird.

Mit diesem Parkbremssystem und einer entsprechenden elektronischen Steuerung in einem elektronischen Steuergerät (zur Steuerung der 3/2-Magnetventile 110, 120) sowie zwei elektrischen Tastern als Mensch-Maschine-Schnittstelle (HMI) können alle Funktionen, wie sie aus konventionellen Parkbremssystemen bekannt sind, sowie diverse zusätzliche automatische Funktionen softwaregesteuert ausgeführt werden. Die in der Beschreibung, den Ansprüchen und den Figuren offenbarten Merkmale der Erfindung können sowohl einzeln als auch in beliebiger Kombination für die Verwirklichung der Erfindung wesentlich sein.

BEZUGSZEICHENLISTE

| | |
|---|---|
| 100A, 100B | elektrische Parkbremseinheiten |
| 101,102,501,502 | Druckluftzufuhr |
| 105 | Zuleitung |
| 107 | Ableitung |
| 110,120,610,620 | erstes und zweites 3/2-Ventil |
| 111, 113, 114 | Anschlüsse des ersten 3/2-Ventils |
| 121, 123, 124 | Anschlüsse des zweiten 3/2-Ventils |
| 112, 122 | elektrische Steueranschlüsse |
| 116,136 | Vorspanneinrichtung |
| 130, 630 | Ventileinrichtung |
| 131,133,631,632,.. | Einlässe |
| 132 | Steuereingang |

| 134, 135 | Kolben der Ventileinrichtung |
| 137,636 | Feder |
| 140,660 | Federspeicher |
| 150,550 | Wechselventil |
| 190, 590 | Entlüftung |
| 240 | Bremsanschluss für Trailer |
| 505 | Zuleitung |
| 507a,b | Parkbremsanschlüsse |
| 510, 520 | manuelle Ventile |
| 560 | Überbrückungseinheit |
| 639 | Kolbenelement |
| 662 | Federspeicherkolben |
| 670 | Bremskomponente |
| A1, A2 | effektive Druckwirkflächen |

**Patentansprüche**

1. Elektrische Parkbremse (100, 100A, 100B) für ein Nutzfahrzeug, umfassend:

   - eine Zuleitung (105) für Bremsdruckluft;
   - eine Ableitung (107) von Bremsdruckluft für eine pneumatische Bremseinrichtung;
   - ein erstes Ventil (110) und ein zweites Ventil (120), die jeweils ansprechend auf elektrische Steuersignale zwischen einem stabilen Zustand und einem aktivierten Zustand schaltbar sind; und
   - eine Ventileinrichtung (130), die zwischen der Zuleitung (105) und der Ableitung (107) geschaltet ist und einen Steuereingang (132) aufweist, wobei die Ventileinrichtung (130) ausgebildet ist, um in Antwort auf Steuersignale an dem Steuereingang (132) zwischen einem stabilen Zustand und einem aktivierten Zustand zu schalten, wobei in dem aktivierten Zustand die Zuleitung (105) mit der Ableitung (107) verbunden ist,

   **dadurch gekennzeichnet, dass**
   das erste Ventil (110) in dem stabilen Zustand den Steuereingang (132) der Ventileinrichtung (130) mit der Ableitung (107) verbindet, um einen gegenwärtigen Zustand der Ventileinrichtung (130) aufrechtzuerhalten, wenn die Bremsdruckluft an der Ableitung (107) anliegt, und in dem aktivierten Zustand den Steuereingang (132) mit dem zweiten Ventil (120) verbindet.

2. Parkbremse (100, 100A, 100B) nach Anspruch 1,
   **dadurch gekennzeichnet, dass**
   das zweite Ventil (120) in dem stabilen Zustand die Zuleitung (105) mit dem ersten Ventil (110) verbindet, um die Ventileinrichtung (130) zu aktivieren, und in dem aktivierten Zustand die Verbindung zum ersten Ventil (110) entlüftet und, wenn das erste Ventil (110) im aktivierten Zustand ist, die Verbindung zum Steueranschluss (132) der Ventileinrichtung (130) entlüftet.

3. Parkbremse (100, 100A, 100B) nach Anspruch 1,
   **dadurch gekennzeichnet, dass**
   das zweite Ventil (120) in dem aktivierten Zustand die Zuleitung (105) mit dem ersten Ventil (110) verbindet, um die Ventileinrichtung (130) zu aktivieren, und in dem stabilen Zustand die Verbindung zum ersten Ventil (110) entlüftet und, wenn das erste Ventil (110) im aktivierten Zustand ist, die Verbindung zum Steueranschluss (132) der Ventileinrichtung (130) entlüftet.

4. Parkbremse (100, 100A, 100B) nach einem der vorhergehenden Ansprüche,
   **dadurch gekennzeichnet, dass**
   das erste Ventil (110) und das zweite Ventil (120) 3/2-Magnetventile sind, die in einem stromlosen Zustand den stabilen Zustand annehmen.

5. Parkbremse (100, 100A, 100B) nach einem der vorhergehenden Anspruch, wobei die Ventileinrichtung (130) ein Booster-Ventil mit zumindest einem federvorgespannten Kolben (135, 134) und einer Entlüftungsöffnung (190) ist,
   **dadurch gekennzeichnet, dass**

die Ventileinrichtung (130) ausgebildet ist, um in dem stabilen Zustand die Ableitung (107) zu entlüften und die Entlüftungsöffnung (190) in eine Bewegungsrichtung des Kolbens (134, 135) zeigt oder seitlich davon angeordnet ist.

6. Parkbremse (100, 100A, 100B) nach Anspruch 5,
   **dadurch gekennzeichnet, dass**
   die Ventileinrichtung (130) Folgendes aufweist:

   - ein Gehäuse mit zumindest zwei Kammern umfasst;
   - eine erste Öffnung (131), eine zweite Öffnung (132) und eine dritte Öffnung (133);
   - einen ersten Kolben (135) in der ersten Kammer, der durch ein erstes Federelement (136) entgegen einem Druck an der zweiten Öffnung (132) vorgespannt ist; und
   - einen zweiten Kolben (134) in der zweiten Kammer, der durch ein zweites Federelement (137) vorgespannt ist, um eine Verbindung zwischen der ersten Öffnung (131) und der dritten Öffnung (133) in einem drucklosen Zustand zu unterbrechen,

   wobei der erste Kolben (135) bei einer Druckluftzufuhr über die zweite Öffnung (132) den zweiten Kolben (134) kontaktiert und sich beide Kolben (135, 134) entgegen der Federspannung der ersten Feder (136) und der Federspannung der zweiten Feder (137) zusammen verschieben, sodass die Verbindung zwischen der ersten Öffnung (131) und der dritten Öffnung (133) geöffnet ist, während im drucklosen Zustand der erste Kolben (135) sich von dem zweiten Kolben (134) entfernt und dadurch den dritten Einlass (133) mit der Entlüftungsöffnung (190) verbindet.

7. Parkbremse (100, 100A, 100B) nach einem der vorhergehenden Ansprüche,
   **gekennzeichnet durch**
   ein Wechselventil (150) mit einem ersten Anschluss für eine erste Druckluftzufuhr (101) und einem zweiten Anschluss für eine zweite Druckluftzufuhr (102), wobei das Wechselventil (150) ausgebildet ist, um in Abhängigkeit davon, wo ein höherer Bremsdruck anliegt, die erste Druckluftzufuhr (101) oder die zweite Druckluftzufuhr (102) mit der Zuleitung (105) zu verbinden.

8. Elektrisches Parkbremssystem für ein Nutzfahrzeug mit einer Parkbremseinrichtung (140), insbesondere einem Federspeicher, und einem Trailerparkbremsanschluss (240),
   **gekennzeichnet durch**

   - eine erste elektrische Parkbremse (100A) nach einem der Ansprüche 1 bis 7, wobei die erste elektrische Parkbremse (100A) zwischen der Druckluftzufuhr (105) und einer ersten Ableitung (107a), die an die Parkbremseinrichtung (140) koppelt, ausgebildet ist; und
   - eine zweite elektrische Parkbremse (100B) nach einem der Ansprüche 1 bis 7, wobei die zweite Parkbremse (100B) zwischen der Druckluftzufuhr (105) und einer zweiten Ableitung (107b), die an Trailerparkbremsanschluss (240) koppelt, ausgebildet ist.

9. Nutzfahrzeug mit einer Bremseinrichtung, die zumindest einen Federspeicherzylinder (140) aufweist, der im drucklosen Zustand eine Parkbremse über eine Vorspannkraft aktiviert,
   **gekennzeichnet durch**
   ein elektrisches Parkbremssystem nach Anspruch 8, wobei die Parkbremse durch die Bremsdruckluft an der Ableitung (107) lösbar ist.

10. Nutzfahrzeug nach Anspruch 9,
    **gekennzeichnet durch**
    eine Steuereinrichtung zum elektrischen Steuern des ersten Ventils (110a, 110b) und/oder des zweiten Ventils (120a, 120b), um:

    - auf ein Feststellen eines Losfahrwunsches, die Ventileinrichtung (130) durch ein Aktivieren zumindest des ersten Ventils (110) zu aktivieren und sicherzustellen, dass das zweite Ventil (120) Druckluft von der Zuleitung (105) durchleitet;
    - auf ein Feststellen eines Parkwunsches, die Ventileinrichtung (130) in den stabilen Zustand durch ein Aktivieren zumindest des ersten Ventils (110) in den stabilen Zustand zu bringen und sicherzustellen, dass das zweite Ventil (120) die Verbindung zum ersten Ventil (110) entlüftet.

11. Verfahren zum Betätigen einer elektrischen Parkbremse nach einem Ansprüche 1 bis 7,

**gekennzeichnet durch:**

- auf ein Feststellen eines Losfahrwunsches, Aktivieren (S110) der Ventileinrichtung (130) durch ein Aktivieren des ersten Ventils (110);
- auf ein Feststellen eines Parkwunsches, Schalten (S120) der Ventileinrichtung (130) in den stabilen Zustand durch ein Entlüften des Steuereingangs (132) durch ein Aktivieren zumindest des ersten Ventils (110).

**12.** Verfahren nach Anspruch 11,
**dadurch gekennzeichnet, dass**
der Parkwunsch durch zumindest eine der folgenden Bedingungen ausgelöst wird:

- eine Eingabe des Fahrers,
- Empfang eines entsprechenden Signals einer Steuereinheit bei autonomem Fahrbetrieb,
- Feststellen eines Stillstandes des Fahrzeuges bei Vorliegen von zumindest einer Zusatzbedingung, die insbesondere ein Ausschalten der Zündung oder eine fortlaufende Betätigung der Betriebsbremse oder eine andere Bedingung umfasst; und

der Losfahrwunsch durch zumindest eine der folgenden Bedingungen ausgelöst wird:

- Eingabe des Fahrers,
- Betätigen eines Beschleunigungspedals,
- Empfang eines entsprechenden Signals einer Steuereinheit bei autonomem Fahrbetrieb,
- Betätigen der Betriebsbremse.

**13.** Verfahren nach Anspruch 11 oder Anspruch 12, wobei die elektrische Parkbremse (100A, 100B) Teil eines Parkbremssystems nach Anspruch 8 ist,
**gekennzeichnet durch**

- Betätigen der ersten elektrischen Parkbremse (100A) und/oder der zweiten elektrischen Parkbremse (100B), wobei das Betätigen einzeln oder gemeinsam oder nacheinander ausgeführt wird.


**Claims**

**1.** An electric parking brake (100, 100A, 100B) for a utility vehicle, comprising:

- a feed line (105) for brake-pressure air;
- a discharge line (107) for brake-pressure air for a pneumatic brake device;
- a first valve (110) and a second valve (120) that can each be switched between a stable state and an activated state in response to electrical control signals; and
- a valve device (130) that is connected between the feed line (105) and the discharge line (107) and has a control input (132), the valve device (130) being designed to switch between a stable state and an activated state in response to control signals at the control input (132), the feed line (105) being connected to the discharge line (107) in the activated state,

**characterised in that**
the first valve (110) connects the control input (132) of the valve device (130) to the discharge line (107) in the stable state in order to maintain the prevailing state of the valve device (130) when the brake-pressure air is applied to the discharge line (107), and connects the control input (132) to the second valve (120) in the activated state.

**2.** A parking brake (100, 100A, 100B) according to claim 1,
**characterised in that**
the second valve (120) connects the feed line (105) to the first valve (110) in the stable state in order to activate the valve device (130), vents the connection to the first valve (110) in the activated state and vents the connection to the control terminal (132) of the valve device (130) when the first valve (110) is in the activated state.

**3.** A parking brake (100, 100A, 100B) according to claim 1,
**characterised in that**

the second valve (120) connects the feed line (105) to the first valve (110) in the activated state in order to activate the valve device (130), vents the connection to the first valve (110) in the stable state and vents the connection to the control terminal (132) of the valve device (130) when the first valve (110) is in the activated state.

4.  A parking brake (100, 100A, 100B) according to any one of the preceding claims,
    **characterised in that**
    the first valve (110) and the second valve (120) are 3/2-way solenoid valves that assume the stable state when de-energised.

5.  A parking brake (100, 100A, 100B) according to any one of the preceding claims, the valve device (130) being a booster valve having at least one spring-preloaded piston (135, 134) and a vent opening (190),
    **characterised in that**
    the valve device (130) is designed to vent the discharge line (107) in the stable state and the vent opening (190) points in a direction of motion of or is arranged to the side of the piston (134, 135).

6.  A parking brake (100, 100A, 100B) according to claim 5,
    **characterised in that**
    the valve device (130) has the following:

    - a housing with at least two chambers;
    - a first opening (131), a second opening (132) and a third opening (133);
    - a first piston (135) in the first chamber that is preloaded by a first spring element (136) against a pressure at the second opening (132); and
    - a second piston (134) in the second chamber that is preloaded by a second spring element (137) in order to interrupt a connection between the first opening (131) and the third opening (133) in an unpressurised state,

    the first piston (135) contacting the second piston (134) as compressed air is supplied via the second opening (132) and the two pistons (135, 134) moving towards one another against the spring tension of the first spring (136) and the spring tension of the second spring (137) such that the connection between the first opening (131) and the third opening (133) is open, whereas in the unpressurised state the first piston (135) moves away from the second piston (134) and so connects the third inlet (133) to the vent opening (190).

7.  A parking brake (100, 100A, 100B) according to any one of the preceding claims,
    **characterised by**
    a shuttle valve (150) having a first port for a first compressed-air supply (101) and a second port for a second compressed-air supply (102), the shuttle valve (150) being designed to connect the first compressed-air supply (101) or the second compressed-air supply (102) to the feed line (105) depending on where the brake pressure is higher.

8.  An electric parking-brake system for a utility vehicle having a parking-brake device (140), in particular a spring-type actuator, and a trailer parking-brake port (240),
    **characterised by**

    - a first electric parking brake (100A) according to any one of claims 1 to 7, the first electric parking brake (100A) being formed between the compressed-air supply (105) and a first discharge line (107a) that is coupled to the parking-brake device (140); and
    - a second electric parking brake (100B) according to any one of claims 1 to 7, the second parking brake (100B) being formed between the compressed-air supply (105) and a second discharge line (107b) that is coupled to the trailer parking-brake port (240).

9.  A utility vehicle with a braking device that has at least one spring-loaded cylinder (140) that activates a parking brake by means of a preload force in the unpressurised state,
    **characterised by**
    an electric parking-brake system according to claim 8, it being possible to release the parking brake by means of the brake-pressure air at the discharge line (107).

10. A utility vehicle according to claim 9,
    **characterised by**

a control device for electrically controlling the first valve (110a, 110b) and/or the second valve (120a, 120b) in order to:

- activate the valve device (130) by activating at least the first valve (110) and ensure that the second valve (120) passes compressed air from the feed line (105) when an intention to drive off is established;
- switch the valve device (130) to the stable state by activating at least the first valve (110) in the stable state and ensure that the second valve (120) vents the connection to the first valve (110) when an intention to park is established.

11. A method for actuating an electric parking brake according to any one of claims 1 to 7, **characterised by**

- the activation (S110) of the valve device (130) by activating the first valve (110) when an intention to drive off is established;
- the switching (S120) of the valve device (130) to the stable state by venting the control input (132) by activating at least the first valve (110) when an intention to park is established.

12. A method according to claim 11, **characterised in that** the intention to park is triggered by at least one of the following conditions:

- an input by the driver,
- reception of a corresponding signal from a control unit in the case of autonomous vehicle operation,
- establishment that the vehicle is at a standstill when at least one supplementary condition obtains including, in particular, the ignition being switched off or the service brake being actuated continuously or another condition; and

the intention to drive off is triggered by at least one of the following conditions:

- an input by the driver,
- actuation of the accelerator pedal,
- reception of a corresponding signal from a control unit in the case of autonomous vehicle operation,
- actuation of the service brake.

13. A method according to claim 11 or claim 12, the electric parking brake (100A, 100B) being part of a parking-brake system according to claim 8, **characterised by**

- the actuation of the first electric parking brake (100A) and/or the second electric parking brake (100B), the brakes being actuated individually or jointly or in succession.

**Revendications**

1. Frein (100, 100A, 100B) électrique de stationnement d'un véhicule utilitaire, comprenant:

- un conduit (105) d'apport d'air comprimé de freinage ;
- un conduit (107) d'évacuation d'air comprimé de freinage pour un dispositif pneumatique de freinage ;
- une première vanne (110) et une deuxième vanne (120), qui peuvent commuter respectivement en réaction à des signaux électriques de commande entre un état stable et un état activé ; et
- un dispositif (130) de vanne, qui est monté entre le conduit (105) d'apport et le conduit (107) d'évacuation et qui a une entrée (132) de commande, le dispositif (130) de vanne étant constitué pour, en réponse à des signaux de commande à l'entrée (132) de commande, commuter entre un état stable et un état activé, dans lequel dans l'état activé, le conduit (105) d'apport communique avec le conduit (107) d'évacuation,

**caractérisé en ce que**
la première vanne (110) met dans l'état stable l'entrée (132) de commande du dispositif (130) de vanne en communication avec le conduit (107) d'évacuation pour maintenir un état présent du dispositif (130) de vanne, si l'air sous pression de freinage s'applique au conduit (107) d'évacuation et dans l'état activé met l'entrée (132) de commande en communication avec la deuxième vanne (120).

**2.** Frein (100, 100A, 100B) de stationnement suivant la revendication 1,
**caractérisé en ce que**
la deuxième vanne (120) met dans l'état stable le conduit (105) d'apport en communication avec la première vanne (110) pour activer le dispositif (130) de vanne et dans l'état activé purge la liaison à la première vanne (110), et si la première vanne (110) est dans l'état activé purge la liaison au raccord (132) de commande du dispositif (130) de vanne.

**3.** Frein (100, 100A, 100B) de stationnement suivant la revendication 1,
**caractérisé en ce que**
la deuxième vanne (120) met dans l'état activé le conduit (105) d'apport en communication avec la première vanne (110) pour activer le dispositif (130) de vanne et, dans l'état stable, purge la liaison à la première vanne (110) et, si la première vanne (110) est dans l'état activé purge la liaison au raccord (132) de commande du dispositif (130) de vanne.

**4.** Frein (100, 100A, 100B) de stationnement suivant l'une des revendications précédentes,
**caractérisé en ce que**
la première vanne (110) et la deuxième vanne (120) sont des électrovannes 3/2, qui prennent dans un état sans courant l'état stable.

**5.** Frein (100, 100A, 100B) de stationnement suivant l'une des revendications précédentes, dans lequel le dispositif (130) de vanne est une vanne booster ayant au moins un piston (135, 134) précontraint par un ressort et une ouverture (190) de purge,
**caractérisé en ce que**
le dispositif (130) de vanne est constitué pour dans l'état stable purger le conduit (107) d'évacuation et l'ouverture (190) de purge pointe dans une direction de déplacement du piston (134, 135) ou est disposée latéralement à celle-ci.

**6.** Frein (100, 100A, 100B) de stationnement suivant la revendication 5,
**caractérisé en ce que**
le dispositif (130) de vanne a ce qui suit :

- il comprend un corps ayant au moins deux chambres ;
- une première ouverture (131) et une deuxième ouverture (132) et une troisième ouverture (133) ;
- un premier piston (135) dans la première chambre, qui est précontraint par un premier élément (136) de ressort à l'encontre d'une pression sur la deuxième ouverture (132); et
- un deuxième piston (134) dans la deuxième chambre, qui est précontraint par un deuxième élément (137) de ressort pour interrompre une communication entre la première ouverture (131) et la troisième ouverture (133) dans un état sans pression,

dans lequel le premier piston (135), lors d'un apport d'air comprimé par la deuxième ouverture (132), entre en contact avec le deuxième piston (134) et les deux pistons (135, 134) se déplacent ensemble à l'encontre de la tension du premier ressort (136) et de la tension du deuxième ressort (137) de manière à ouvrir la communication entre la première ouverture (131) et la troisième ouverture (133) tandis que dans l'état sans pression, le premier piston (135) s'éloigne du deuxième piston (134) et met ainsi la troisième entrée (133) en communication avec l'ouverture (190) de purge.

**7.** Frein (100, 100A, 100B) de stationnement suivant l'une des revendications précédentes,
**caractérisé par**
une vanne (150) à deux voies ayant un premier raccord pour un premier apport (101) d'air comprimé et un deuxième raccord pour un deuxième apport (102) d'air comprimé, la vanne (150) à deux voies étant constituée pour mettre, en fonction du point où règne une pression de freinage plus haute, le premier apport (101) d'air comprimé ou le deuxième apport (102) d'air comprimé en communication avec le conduit (105) d'apport.

**8.** Système électrique de frein de stationnement d'un véhicule utilitaire comprenant un dispositif (140) de frein de stationnement, notamment à ressort accumulateur, et un raccord (240) de frein de stationnement de remorque,
**caractérisé par**

- un premier frein (100A) électrique de stationnement suivant l'une des revendications 1 à 7, le premier frein (100A) électrique de stationnement étant constitué entre l'apport (105) d'air comprimé et un premier conduit (107a) d'évacuation, qui communique avec le dispositif (140) de frein de stationnement ; et
- un deuxième frein (100B) électrique de stationnement suivant l'une des revendications 1 à 7, le deuxième frein (100B) de stationnement étant constitué entre l'apport (105) d'air comprimé et un deuxième conduit (107b) d'évacuation, qui communique avec le raccord (240) de frein de stationnement de remorque.

9.  Véhicule utilitaire comprenant un dispositif de freinage, qui a au moins un cylindre (140) à ressort accumulateur, qui dans l'état sans pression active un frein de stationnement par une force de précontrainte,
    **caractérisé par**
    un système électrique de frein de stationnement suivant la revendication 1, le frein de stationnement pouvant être desserré par l'air comprimé de freinage sur le conduit (107) d'évacuation.

10. Véhicule utilitaire suivant la revendication 9,
    **caractérisé par**
    un dispositif de commande pour la commande électrique de la première vanne (110a, 110b) et/ou de la deuxième vanne (120a, 120b) pour :

    - à la constatation d'un souhait de desserrage, activer le dispositif (130) de vanne par une activation d'au moins la première vanne (110) et s'assurer que la deuxième vanne (120) fait passer de l'air comprimé du conduit (105) d'apport ;
    - à la constatation d'un souhait de stationnement, mettre le dispositif (130) de vanne dans l'état stable par l'activation d'au moins la première vanne (110) dans l'état stable et s'assurer que la deuxième vanne (120) purge la liaison à la première vanne (110).

11. Procédé pour actionner un frein électrique de stationnement suivant l'une des revendications 1 à 7
    **caractérisé par** :

    - à la constatation d'un souhait de desserrage, activer (S110) le dispositif (130) de vanne par une activation de la première vanne (110) ;
    - à la constatation d'un souhait de stationnement, mettre (S210) le dispositif (130) de vanne dans l'état stable par une purge de l'entrée (132) de commande par une activation d'au moins la première vanne (110).

12. Procédé suivant la revendication 11
    **caractérisé en ce que**
    on déclenche le souhait de stationnement par au moins l'une des conditions suivantes :

    - une entrée du conducteur,
    - la réception d'un signal correspondant de l'unité de commande lors d'un fonctionnement en circulation autonome,
    - la constatation d'un état d'arrêt du véhicule en présence d'au moins une condition supplémentaire qui comprend notamment une mise hors-circuit de l'allumage et/ou un actionnement continu du frein de service ou une autre condition et

    on déclenche le souhait de desserrage par au moins l'une des conditions suivantes

    - une entrée de l'utilisateur,
    - un actionnement d'une pédale d'accélération,
    - la réception d'un signal correspondant de l'unité de commande lors d'un fonctionnement en circulation autonome,
    - l'actionnement du frein de service.

13. Procédé suivant la revendication 11 ou la revendication 12, dans lequel le frein (100A, 100B) électrique de stationnement fait partie d'un système de frein de stationnement suivant la revendication 8,
    **caractérisé par**

    - l'actionnement du premier frein (100A) électrique de stationnement et/ou du deuxième frein (100B) électrique de stationnement, l'actionnement étant réalisé individuellement ou conjointement ou l'un après l'autre.

Fig. 1

Fig. 2

EP 3 665 051 B1

Fig. 3A

Fig. 3B

EP 3 665 051 B1

auf ein Feststellen eines Losfahrwunsches,
Aktivieren der Ventileinrichtung
durch ein Aktivieren des ersten Ventils

S110

auf ein Feststellen eines Parkwunsches, Schalten der
Ventileinrichtung in den stabilen Zustand durch ein
Entlüften des Steuereingangs der Ventileinrichtung
durch ein Aktivieren zumindest des ersten Ventils

S120

Fig. 4

Fig. 5

Fig. 6B

Fig. 6A

**IN DER BESCHREIBUNG AUFGEFÜHRTE DOKUMENTE**

**In der Beschreibung aufgeführte Patentdokumente**

- EP 2821303 A1